# EUROPÄISCHE PATENTSCHRIFT

(11) **EP 0 891 019 B1**
(45) Veröffentlichungstag und Bekanntmachung des Hinweises auf die Patenterteilung: **21.03.2001**
(21) Anmeldenummer: 98111943.1
(22) Anmeldetag: 27.06.1998
(51) Int. Cl.: H01R 35/02, H02G 11/00

(54) **Kabel mit einem wendelförmigen Abschnitt**
Cable with helicoidal section
Câble à section hélicoidale

(30) Priorität: 11.07.1997 DE 19729694
(43) Veröffentlichungstag der Anmeldung: 13.01.1999
(73) Patentinhaber: ROBERT BOSCH GMBH, 70442 Stuttgart (DE)
(72) Erfinder: Kallinich, Reiner, 31139 Hildesheim (DE)

(56) Entgegenhaltungen:
- DE-A- 2 429 978
- DE-U- 9 005 989
- US-A- 5 313 514

## Beschreibung

Die Erfindung bezieht sich auf ein Kabel mit einem Abschnitt in Gestalt einer Wendel, deren Außenkontur eine Stufe aufweist.

### Stand der Technik

Die Erfindung geht von der Gattung aus, wie im unabhängigen Anspruch 1 angegeben. Ein solches Kabel wird beispielsweise von der Firma Blaupunkt bei einem Handmikrofon für Reisebusse verwendet, wo das Handmikrofon mit seinem Schaft in einen hülsenförmigen Mikrofonhalter im Armaturenbrett gesteckt werden kann. In der Druckschrift US-A-5 313 514 wird ein Kabel gemäß dem Oberbegriff des Anspruchs 1 beschrieben.

Beim Herausnehmen des Handmikrofons stellt sich das Problem, daß das Kabel sich mit der ersten Windung des wendelförmigen Abschnittes des Kabels am unteren Rand des hülsenförmigen Mikrofonhalters verhaken kann.

Die Lösung des Problems liegt in dem Merkmalen des Kennzeichnenden Teils des Anspruchs 1.

### Vorteile der Erfindung

Der Anmeldungsgegenstand mit den Merkmalen des Anspruches 1 hat folgenden Vorteil:
Durch den stufenlosen Übergang zum wendelförmigen Abschnitt des Kabels kann dieses leichter als bisher aus einer hülsenförmigen Halterung, insbesondere Mikrofonhalterung herausgeführt werden.

Vorteilhafte Weiterbildungen sind in den abhängigen Ansprüchen angegeben, deren Merkmale auch, soweit sinnvoll, miteinander kombiniert werden können.

Beispielsweise kann das Kabel mit einem Stecker versehen sein und die Hülle kann die Steckerachse und die Achse des die Stufe bildenden Wendelendes zum Fluchten bringen. Dadurch wird das Ein- und Ausfädeln des Kabels aus einer hülsenförmigen Führung oder Halterung erleichtert.

Die Herstellung gestaltet sich einfach, wenn die Hülle zusammen mit dem Stecker und dem die Stufe bildenden Wendelende umspritzt wird.

Bevorzugt wird die Hülle flexibel gestaltet.

### Zeichnung

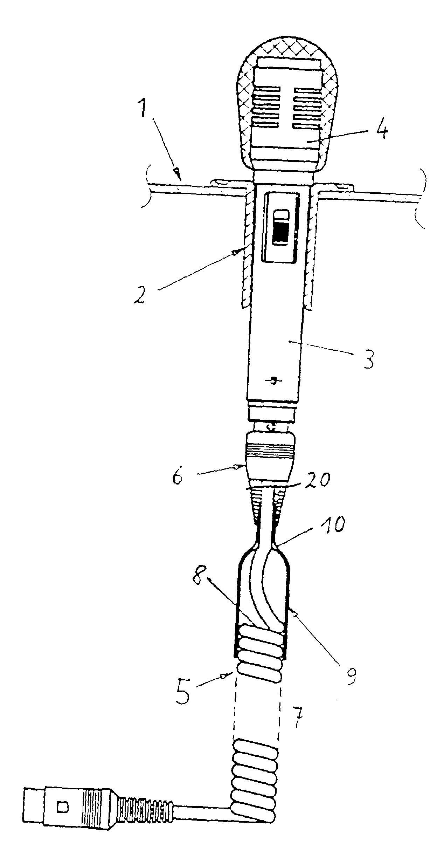

Ein Ausführungsbeispiel der Erfindung ist in der Zeichnung gezeigt und in der nachfolgenden Beschreibung näher erläutert.

### Beschreibung des Ausführungsbeispiels

In einem Armaturenbrett 1 ist eine als Mikrofonhalter 2 dienende Hülse angeordnet. Sie dient als Halterung für den Schaft 3 eines Handmikrofons 4 und zugleich als Führung für ein (Mikrofon-)Kabel 5, das über einen Stecker 6 mit dem Schaft 3 verbunden ist.

Das Kabel 5 weist einen als Wendel ausgebildeten Abschnitt 7 auf, der oben mit einer Stufe 8 an der ersten Windung der Wendel endet, wo das Kabel 5 in einen nicht wendelförmigen Abschnitt übergeht. Dort könnte sich das Kabel 5 beim Herausnehmen des Handmikrofons 4 an der Unterkante des Mikrofonhalters 2 verhaken, wenn nicht entsprechend der Erfindung durch eine Hülle 9 für einen stufenlosen Übergang zwischen den beiden Abschnitten des Kabels 5 gesorgt wäre.

Die Hülle 9 ist aus flexiblem Material, beispielsweise PVC hergestellt und zusammen mit dem Stecker 6 und einem kurzen Stück des Kabels 5 umspritzt (Umspritzung 10), was den stufenlosen Übergang zwischen den Kabelabschnitten verbessert. (Der Stecker 6, die Hülle 9 und die Umspritzung 10 sind unterhalb einer Linie 20 aufgeschnitten dargestellt.)

Die Hülle 9 umgibt den gewendelten Abschnitt 7 so weit, daß zwei bis drei Windungen in der Hülle 9 liegen. Dadurch ist sichergestellt, daß die Stufe 8 auch dann nicht aus der Hülle 9 herauskommt, wenn der wendelförmige Abschnitt 7 des Kabels 5 beim Herausziehen des Handmikrofons 4 aus dem Mikrofonhalter 2 gedehnt wird.

Die Hülle 9 ist so gestaltet, daß sie den wendelförmigen Abschnitt 7 des Kabels 5 in einen koaxialen Übergang zum Stecker 6 zwingt. Die Achsen des Schaftes 3, des Steckers 6 und des wendelförmigen Abschnittes 7 fluchten also.

## Patentansprüche

1. Kabel mit einem Abschnitt (7) in Gestalt einer Wendel, deren Außenkontur eine Stufe (8) aufweist,
dadurch gekennzeichnet,
daß das Kabel in der Umgebung der Stufe (8) von einer Hülle (9) umgeben ist, deren Form im wesentlichen einen stufenlosen Übergang zwischen der Außenkontur des Kabels (5) auf einer Seite der Stufe (8) und der Außenkontur der Wendel auf der anderen Seite der Stufe (8) bildet, wobei einige Windungen der Wendel in der Hülle (9) liegen.

2. Kabel nach Anspruch 1, dadurch gekennzeichnet, daß das Kabel mit einem Stecker (6) versehen ist und die Stufe (8) sich zwischen der Wendel und dem in den Stecker (6) führenden Kabelende befindet.

3. Kabel nach Anspruch 2, dadurch gekennzeichnet, daß die Hülle (9) die Achse des Steckers (6) und die Achse des die Stufe (8) bildenden Endes der Wendel zum Fluchten bringt.

4. Kabel nach Anspruch 2 oder 3, dadurch gekennzeichnet, daß die Hülle (9) zusammen mit dem Stecker (6) und dem die Stufe (8) bildenden Ende der Wendel umspritzt ist.

5. Kabel nach einem der vorangehenden Ansprüche, dadurch gekennzeichnet, daß die Hülle (9) flexibel ist.

6. Kabel nach einem der vorangehenden Ansprüche, dadurch gekennzeichnet, daß das Kabel als Mikrofonkabel für ein Handmikrofon (4) ausgebildet ist, das in Verlängerung des Kabels (5) einen Schaft (3) aufweist, der in eine als Mikrofonhalter (2) dienende Hülse steckbar ist.

## Claims

1. Cable with a section (7) in the form of a helix, the outer contour of which has a step (8), characterized in that the cable is surrounded in the vicinity of the step (8) by a sheath (9), the shape of which essentially forms a stepless transition between the outer contour of the cable (5) on one side of the step (8) and the outer contour of the helix on the other side of the step (8), some turns of the helix lying in the sheath (9).

2. Cable according to Claim 1, characterized in that the cable is provided with a plug (6) and the step (8) is located between the helix and the cable end leading into the plug (6).

3. Cable according to Claim 2, characterized in that the sheath (9) brings the axis of the plug (6) and the axis of the end of the helix forming the step (8) into alignment.

4. Cable according to Claim 2 or 3, characterized in that the sheath (9) is encapsulated together with the plug (6) and the end of the helix forming the step (8).

5. Cable according to one of the preceding claims, characterized in that the sheath (9) is flexible.

6. Cable according to one of the preceding claims, characterized in that the cable is designed as a microphone cable for a hand-held microphone (4), which has in extension of the cable (5) a shaft (3) which can be fitted into a sleeve serving as a microphone holder (2).

## Revendications

1. Câble avec un segment (7) de forme hélicoïdale, dont le contour extérieur présente un gradin (8),
caractérisé en ce que
le câble est entouré aux environs du gradin (8) par une gaine (9), dont la forme constitue sensiblement un passage sans gradin entre le contour extérieur du câble (5) sur un côté du gradin (8) et le contour extérieur de l'hélice sur l'autre côté du gradin (8), quelques spires de l'hélice se trouvant dans la gaine (9).

2. Câble selon la revendication 1,
caractérisé en ce que
le câble est pourvu d'un connecteur (6) et le gradin (8) se trouve entre l'hélice et l'extrémité du câble conduisant dans le connecteur (6).

3. Câble selon la revendication 2,
caractérisé en ce que
la gaine (9) met en alignement l'axe du connecteur (6) et l'axe de l'extrémité de l'hélice formant le gradin (8).

4. Câble selon la revendication 2 ou 3,
caractérisé en ce que
la gaine (9) est injectée en même temps que le connecteur (6) et l'extrémité de l'hélice qui forme le gradin (8).

5. Câble selon l'une quelconque des revendications précédentes,
caractérisé en ce que
la gaine (9) est flexible.

6. Câble selon l'une quelconque des revendications précédentes ,
caractérisé en ce que
le câble est constitué comme un câble de microphone pour un microphone à main (4) qui présente dans le prolongement du câble (5) une tige (3), que l'on peut enficher dans un manchon servant de support de microphone (2).
